(19) Europäisches Patentamt
European Patent Office
Office européen des brevets

(11) Publication number: 0 197 411 A2

# (12) EUROPEAN PATENT APPLICATION

(21) Application number: 86104003.8

(22) Date of filing: 24.03.86

(51) Int. Cl.4: C08F 2/28 , C08F 283/00 , C09D 3/00

(30) Priority: 27.03.85 US 716665
27.03.85 US 716664

(43) Date of publication of application:
15.10.86 Bulletin 86/42

(84) Designated Contracting States:
AT BE CH DE FR GB IT LI LU NL SE

(71) Applicant: SCM CORPORATION
925 Euclid Avenue
Cleveland, OH 44115(US)

(72) Inventor: Kunz, Barbara L.
23811 Russell Road
Bay Village Ohio(US)
Inventor: Kaffen, Sharon L.
1171 Romayne Drive
Akron Ohio(US)
Inventor: Drexler, Victoria A.
1534 Carraige Hill Drive
Hudson Ohio(US)

(74) Representative: Baillie, Iain Cameron et al
c/o Ladas & Parry Isartorplatz 5
D-8000 München 2(DE)

## (54) Shear resistant cationic latex.

(57) Mechanical stability and coating characteristics of structurally cation-active, film-forming latex, especially useful in electrodeposition coatings can be improved by the addition of small stabilizing amount of linear cationic amine-modified epoxy resin having tertiary amine functionality and base number in the range of 30-500 and/or glycol mono-substitut ed ether alcohols. "Stability" is defined by the absences of agglomerated latex particles as shown by disc centrifuge photosedimentometer traces after subjecting the latex to 30 minutes of mechanical shear using a Hamilton Beach mixer. Such stabilized latex remains substantially non-agglomerated even after being subjected to pumping and shear. Without the stabilizer, agglomeration of the latex occurs.

EP 0 197 411 A2

FIGURE 3/3

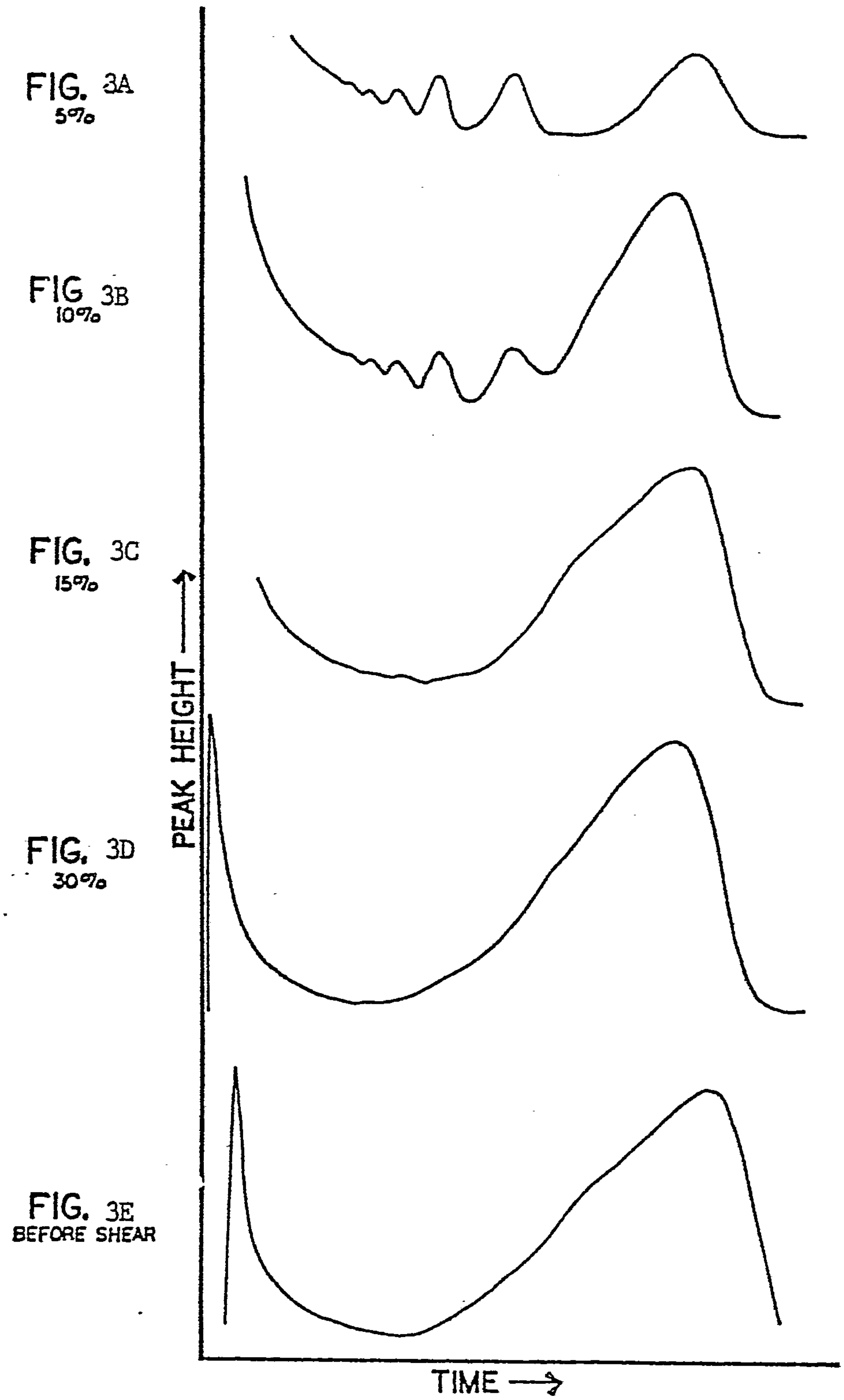


FIG. 3 ADDITIVE STABILIZATION OF LATEX PAINT

# SHEAR RESISTANT CATIONIC LATEX

## BACKGROUND OF THE INVENTION

The invention relates to improved cationic latexes useful in coatings and to a process for imparting mechanical stability to such latexes.

Although water-borne cathodic resin systems are well known, the use of latex binders in cathodic electrocoating is quite new and has not yet achieved full commercial acceptance. Copending Application Serial No. 513,621 filed July 14 1983, now U.S. Patent 4,512,860, gives background information on electrocoating latex for cathodic deposition and is incorporated herein by reference. The term "latex" is defined as a polymer or copolymer prepared from one or more monomers in an aqueous environment by emulsion polymerization techniques. Such latex, usually having an averaage particle size from about 800Å to about 10,000Å and an average molecular weight ranging from about 10,000 up to and above 1,000,000, is quite different from the water-reducible or ionizable polymers prepared, not in aqueous medium, but in solvent systems or neat. The latter water-reducible, cation-active polymers have been in commercial use for electrodeposition coatings for some time. Such conventional cationic latexes are known to be inherently less stable than their anionic counterpart systems.

For electrodeposition coatings, it is necessary to develop a latex that can be pumped and will be relatively insensitive to shear forces. Stability to shear is a necessary property for the latex itself, pigmented electrocoating compositions and for replenishment baths. In a commercial operation, the coating is continuously sheared by centrifugal pumping which passes the material through ultrafiltration membranes at a rate of 35-40 gallons/min. Instability of the coating, leading to agglomeration of particles after shear, causes fouling of the ultrafiltration membrane, application problems, and loss of coating properties. Such latexes tend to destabilize when subjected to shear forces and pumping processes. It is believed that destabilization is the result of a first-stage agglomeration of latex particles which, if not controlled, results in severe gellation. Gellation interferes with pumping and purification operations and usually interrupts the electrocoating process.

U.S. 3,640,935 (Abriss) teaches a method of improving latex stability by adding to the latex a non-ionic surface-active agent (0.5-3%) as a solution in a water-soluble glycol. Heretofore a prepared latex was judged to be stable if it did not gel after thirty minutes in the Hamilton Beach shear test. It now appears this test is not critical enough to determine particle agglomeration and gelling tendency. A definitive shear test (HB/DCP) method to analyze latex stability was devised whereby the latex was evaluated using a disc centrifuge photosedimentometer (cf U.S. 4,311,039) following Hamilton Beach shear stress mixing for thirty minutes. This test more critically assesses the degree of latex particle agglomeration. It was found that often cationic latexes readily agglomerate when subjected to shear. Attempts to improve mechanical stability by increasing the cationic precursor amine monomer content or by the addition of conventional surfactants or additives, were sufficient to upgrade the latex to prevent severe agglomeration as determined by the new HB/DCP shear test method. Higher amine monomer level in the latex synthesis quite often diminishes latex conversion and increases dirt (coagulum) levels. In the instant invention, improved latex stabilization over that obtained by latex modification and conventional additives, has now been achieved by the addition of minor amounts of specific aminated epoxy resins to the cationic latex synthesized by emulsion polymerization and/or by the addition of specific glycol ether alcohols to the synthesized cationic latex.

## BRIEF SUMMARY OF THE INVENTION

A mechanically stable latex composition which comprises a major amount of structured cation-active latex formed by emulsion polymerization of various vinyl monomers in an aqueous medium and a minor amount of one or more of the following:

a. from about 0.5 to 25 weight percent basis latex solids of a substantially oxirane-free, cationic resin adduct sufficient to impart mechanical and shear stability to said latex; wherein said cationic resin adduct is an amine-modified epoxy resin salt resulting from the reaction of an oligomer selected from the group consisting of polyether, polyester, polyamide, polyepoxide, or polyamine or mixtures thereof having at least one reactive epoxide ring with an amine having at least one amino hydrogen capable of reacting with said epoxide to form said adduct; wherein said oligomer has a molecular weight of from about 400 to 1,500; said resin and said adduct are at least partially neutralized with an inorganic or organic acid;

b. from about 5 to 30 weight percent basis latex solids of a glycol ether alcohol having

the formula:

$R^1-(X)_n-OH$

wherein X equals $-OCH(R^2)CH(R^3)-$ and each X unit can be mutually independent of other X units; $R^1$ is a $C_{1-20}$ alkyl, alkylene, aryl, aralkyl, or alkaryl radical; $R^2$ and $R^3$ are independently selected from C $_{1-6}$ lower alkyl groups or hydrogen with the proviso that when one is lower alkyl the other group must be hydrogen; n is an integer from 1 to 3; and wherein the stability of said latex is evidenced by the lack of substantial particle agglomeration in a disc centrifuge photosedimentometer trace after subjecting said latex to stress mixing for a period of at least 30 minutes.

The invention further relates to an electrocoating process which comprises:

a. providing an amine functional cationic latex prepared by emulsion polymerizing ethylenically unsaturated monomers and amino group containing monomers in an aqueous medium;

b. neutralizing, at least partially, said amine functional cationic latex with an organic or inorganic acid;

c. formulating an electrocoating paint by combining said neutralized cationic latex with a pigment grind and diluting with deionized water to non-volatile content of 1-30%;

d. electrocoating an electrically conductive substrate serving as a cathode by passing an electric current between said cathode and an anode in contact with said electrocoating paint; and

e. curing said coated substrate;

the improvement which comprises stabilizing against shear forces either the latex or the paint formulated therefrom by adding an effective amount of a substantially oxirane-free cationic resin; and/or a glycol ether alcohol stabilizer; added in an amount sufficient to impart mechanical stability to said amine functional cationic latex and sufficient to prevent latex particle agglomeration when the latex is pumped or subjected to shear forces; wherein said cationic resin is an amine-modified epoxy resin adduct obtained by first reacting a lower molecular weight $C_{4-20}$diamine with a multifunctional epoxide terminated polyether to produce an intermediate adduct having a residual amount of reactive N-H linkages suitable for further reaction with an epoxide and thereafter reacting the intermediate adduct with a $C_{3-20}$ epoxide in an amount sufficient to react substantially all the amino hydrogen linkages; and wherein the glycol ether alcohol stabilizer has the formula:

$R^1-(X)_n-OH$

wherein X equals $-OCH(R^2)CH(R^3)-$ and each X unit is mutually independent of other X units; $R^1$ is a $C_{1-20}$ alkyl, alkylene, aryl, aralkyl, or alkaryl radical; $R^1$ and $R^3$are independently selected from $C_{1-6}$ lower alkyl groups or hydrogen with the proviso that when one is lower alkyl the other group must be hydrogen; n is an integer from 1 to 3.

## BRIEF DESCRIPTION OF THE DRAWINGS

The invention may be better understood by having reference to the annexed drawings herein.

Figure 1 is a chart depicting particle size distribution of unstabilized latex paint as analyzed by the disc centrifuge method before and after application of shear forces.

Figure 2 is a chart depicting the effect of added epoxide/amine adduct stabilizer on stability of a mechanically unstable latex paint when subjected to shear.

Figure 3 is a chart depicting the effect of increasing the amount of glycol ether alcohol stabilizer on the stability of the latex.

## DETAILED DESCRIPTION OF THE INVENTION

The invention relates to a stabilized structured cationic latex useful in coating compositions and especially in electrodeposition coatings on a conductive substrate and to a process for imparting mechanical stability thereto. "Stability" is defined as the absence of agglomerated latex particles as shown by disc centrifuge photosedimentometer traces after subjecting the latex to 30 minutes of mechanical shear using a Hamilton Beach high speed mixer. Such latexes are preferably stabilized by the addittion of at least one of the following additives:

a minor amount of a substantially oxirane-free aminated epoxy cationic resin; and/or

a minor amount of a glycol ether stabilizer.

The additives as herein defined are preferably added to the latex or to a formulated paint containing the latex subsequent to the preparation of the latex by emulsion polymerization in an aqueous

medium. Such stabilized latexes can be used in electrocoating baths and in replenishment baths and other traditional applications of cationic latexes, such as textiles and paper coatings.

The cationic latexes which comprise a major portion of the improved coating composition useful in electrodeposition coating of substrate, particularly metal substrate, are prepared in an aqueous medium by emulsion polymerization of monomers having vinylic carbon-to-carbon unsaturation. Preferred latexes are described in U.S. Patent 4,512,860 noted above. These can include all-acrylic polymers and mixtures of acrylics with other monomer types such as for example unsaturated hydrocarbon monomers, i.e. styrene, vinyl toluene and the like.

The term "latex" is understood to comprise a polymer or copolymer prepared from ethylenically unsaturated monomers in an aqueous environment by emulsion polymerization. The resin binder particles in a latex advantageously have a particle size from about 800 to 10,000Å and were preferably in the 1,500-6,000Å range. A cationic latex is a latex having a salt-forming precursor component, capable of being ionized with an acid type reaction whereby the ionized salt portion helps to effect water dispersibility of the latex binder. When the salt-forming precursor, preferably a primary, secondary or tertiary amine portion, is part of the polymeric chain, then such latexes are said to be structurally cation active. When the cation portion is merely added as a non-polymeric unit, the latex is said to be cation-active by the fact that the positively charged ions reside on the surface of the polymer particle.

The vinyl monomers most useful in forming the structured cation latex include acrylic acid, methacrylic acid and their esters, for example, methylmethacrylate, ethylmethacrylate, 2-ethylhexylmethacrylate, butylacrylate, isobornyl acrylate, isobutyl methacrylate and the corresponding hydroxy acrylates, e.g. hydroxy ethyl acrylate, hydroxypropyl acrylate; also the glycol acrylates; allyl acrylates; and epoxy acrylates. Other suitable vinyl monomers include vinyl acetate, vinyl and vinylidene halides, e.g. vinyl chloride, vinylidene chloride; acrylonitrile, methacrylonitrile, dibutyl maleate; amides such as methacrylamide and acrylamide; hydrocarbons such as butadiene, styrene, vinyl toluene and the like.

For structured cationic latex, additional vinyl monomers having base functionality are required in weight percentages of about 0.01 to 35% basis total monomer content. Amino groups are preferably incorporated in the vinyl monomers by using tertiary, secondary or primary amino functional acrylate, methacrylates and acrylamides such as, for example, dimethylaminoethyl methacrylate or acrylate, or dimethylaminopropyl acrylamide or methacrylamide. Such amine functional monomers are copolymerized in an aqueous sytem to build an amino functionality into the acrylate polymer which, when partially or fully neutralized with an ionizer, impart the cationic properties to the acrylic latex. Although various surfactant types are useful in the emulsion polymerization of the latex, a non-ionic surfactant having an HLB value of 16-20 is preferred for at least a portion of the surfactant. These are exemplified by alkaryl polyether alcohols having 1 to 70 polyether units ($OCH_2CH_2$). Octylphenol polyether alcohols having an HLB value of 18 are especially preferred.

Ionizers for the structured cation-latex can be selected from organic carboxylic acids, e.g. lactic, acetic or from mineral acids such as hydrochloric acid, phosphoric acid, sulfuric acid or the like. Phosphoric acid and lactic acid are preferred ionizers.

Ionizers for the epoxy-amine stabilizer can be the same or different ionizers as selected for the cationic latex. Phosphoric acid is a preferred ionizer for the latex preparation and lactic acid is preferred for the ionization of the epoxyamine stabilizers especially when the amine-adduct is post-added after the main emulsion polymerization of vinyl monomers to form the cationic latex. An alternate less preferred approach is the combining of the amine-adduct prior to or during the latex polymerization step.

Referring to the ionization or salt formation, almost any acid sufficiently strong to ionize amine groups on the polyamino polyhydroxy polyether resinous adduct can be employed as the neutralizing acid. Since an acid with $pK_a$ of about 5 or less will ionize a significant proportion of most amine groups, most carboxylic organic aicds will produce a satisfactory degree of ionization of the structurally functional polymer, but it is usually more convenient if the acid selected is itself at least moderately soluble in water. It is frequently desirable that the acid be relatively volatile so that any portion thereof deposited as part of the uncured film will tend to be fugitive upon heating the film to effect cure. Lactic acid is a particularly preferred acid, but many other organic carboxylic acids may be used. Inorganic acids, such as hydrochloric, sulfuric and phosphoric, may also be used.

The structured cation-active latexes prepared by emulsion polymerization in an aqueous medium are preferably stabilized by the post-polymerization addition of specific amine-modified resins added in an amount sufficient to prevent latex particle agglomeration which would normally result when the latex is pumped or subjected to shear forces. Useful amine epoxy adducts for the stabilization of major amounts of cationic latex using a minor amount of stabilizer, generally used in the order of 0.5 to 25 and preferably below 15 percent by weight basis latex solids, include the resin adducts known in the art and exemplified in various patents as for example U.S. Patents 4,423,166; 4,421,620; 4,420,574; 4,419,468; 4,419,467; 4,416,753; 4,403,050; 4,396,732; 4,376,848; 4,376,687; and 3,984,382; all of which are incorporated herein by reference, and many other art recognized adducts. Typically, such adducts will be derived from diamines reacted with an extended polyether and one or more epoxy compounds, usually by sequential reactions, as for example, polyethers, epoxy extended polyethers and alkylene epoxides which contain from about three to about 24 carbon atoms such as the mono olefin epoxides. Especially preferred are the polyether epoxides derived from bisphenol A and paricularly the dispersions exemplified in U.S. Patent 4,159,233 incorporated herein by reference. Specifically these are liquid dispersions comprising a) a substantially oxiranefree precursor adduct of a polyether diepoxide having a molecular weight of from about 350 to 10,000 and preferbly from about 350 to 1500, and a polyamine having a molecular weight from about 60 to 600; said precursor adduct is next reacted with b) a monoepoxide having molecular weight from 100 to 500 and having a normal alkyl group of at least about 4 carbon atoms pendant through only hydrolysis-resistant linkages from the epoxy group of said mono-epoxide, the mole ratio of residues of said polyamine to residues of said diepoxide in said resinous adduct being from about 1.25:1 to 1:1, and said polyamine having form 2 to 5 amine groups per molecule and at least sufficient amino hydrogens to react with substantially all of the epoxy groups of both said diepoxide and said mono-epoxide. Where crosslinking agents are necessary, the dispersion can additionally contain a small amount, usually from about 0.05 to 3.0 weight percent, based on said resinous adduct, of an aminoplast resin. The term aminoplast resin includes melamine, benzoguanamine-formaldehyde adducts as well as alkylated and hydroxyalkyl glycolurils.

As noted above, a wide variety of compounds can act as amine adduct stabilizers for latex stabilization. The preferred amine-modifed resin stabilizers are schematically illustrated by the formula:

$$R^1\text{-}CH_2\text{-}CH\text{-}CH_2\text{-}O\text{-}[R\text{-}]\text{-}CH_2\text{-}CH\text{-}CH_2\text{-}R^1$$

where $R^1$ can be the same or different moiety representing a diamine substituent with tertiary amine functionality reactable with hydrogen acids, organic carboxylic acids or quaternary-former halides to produce respectively dispersible acid salts or quaternary compounds; R is a diradical derived from either an aliphatic or aromatic polyol. When the polyol is an aromatic polyol, bisphenol A is a preferred starting material for the preparation of the amine-modifed resin. For example, bisphenol A is reacted with epichlorohydrin to obtain a bisepoxide which is then reacted with the diamine moiety. Preferably, the reaction of the diamine with the bisepoxide is conducted in such ratio such that a substantial amount of reactive NH groups remain for further reaction with a monoalkyl epoxide, such as for example a $C_{4\text{-}24}$ olefin epoxide. The total reaction of the amine with the epoxy is preferably brought to completion so that substantially all of the epoxide groups have been reacted to form the corresponding alcohol and generate a new carbon to nitrogen linkage.

Useful diamine substituents, are preferably those derived from lower molecular weight aliphatic diamines as for example, N,N-dimethylamino ethyl amine; N,N-diethylamino ethylamine; N,N-dipropylamine ethylamine; N,N-dimethylamino butylamine, N,N-diethyl geranylamine; N,N-dimethyl hexylamine; N,N-diethyl octylamine; N-cyclohexyl-N-ethylamino ethylamine; N-cylcopentyl-N-ethylamino propylamine; N,N-dimethylamino-N'-methylamino propane. It is preferred to react substantially molar equivalent amounts of amine and epoxide in the formation of the stabilizer adduct so that there will be neither an excess of free amine nor a substantial excess of epoxide in the stabilizer.

When the adduct is prepared using excess amine, an unreacted amine monomer should be removed by conventional methods. An alternate approach is to form the stabilizer adduct using an excess of the epoxide so that the amine component is fully reacted. In this case a slight excess of the partially unreacted epoxide will not be detrimental to the latex composition.

One advantage of the stabilizer adducts is that the reaction of the diamine with the epoxide splits the epoxide and produces a free carbon-nitrogen linkage. After neutralization or salt formation with the inorganic acid, organic acid or quaternary-former halide, the adduct stabilizer added to the vinyl latex provides both charge stabilization of the latex (external not buried) and additionally provides reactive hydroxy functionality for use in crosslinking cures when needed.

The amine-modified resins are effective in stabilizing various latexes including the cationic latexes described in U.S. Patent 4,512,860 reference above, which Patent is incorporated herein by reference. Although these synthetic latexes are aqueous acrylic and acrylic/styrene based compositions for application to metal surfaces by cathodic electrodeposition, the invention is not restricted to a particular type of latex. Desirable latexes are cationic latexes and preferably acrylic latexes. The best mode examples exemplify an acrylic latex. This latex, before postaddition of stabilizer passes the 30-minute Hamilton Beach stability test. If the sample is then diluted and analyzed using the disc centrifuge photosedimentometer, it is observed that the primary particles of the latex have agglomerated into much larger particles which are unsuitable for the latex application. Acrylic latexes are prepared by emulsion polymerization as exemplified in U.S. Patent 4,512,860. These can contain small amounts of blocked isocyanotoethyl methacrylate and aminoalkyl acrylates for generation of the cation portion of the latex.

Although not wishing to be bound thereby, it is believed that the particular amine-adduct stabilizers function in part to stabilize the latex and in part to modify the effect of residual lower molecular weight monomers, especially amine monomers, and ionic fragments, derived in part from the catalysts used for emulsion polymerization, all of which are deleterious to the latex and coating derived thereform. The adduct in one sense contributes to the latex ionicity and in a further sense appears to moderate the undesired species which are detrimental to good film deposition. Organic glycol ether alcohol stabilizers useful for the stabilization of a major amount of cationic latex, generally used in the order of 0.5 to 40 and preferably 5-20 percent by weight basis latex solids, include glycol ether alcohols having the generalized formula:

$R^1—(X)_n—OH$

wherein X equals $—OCH(R^2)CH(R^3)—$ and each X unit can be mutually independent of other X units; wherein $R^1$ is a $C_{1-20}$ alkyl, alkylene, aryl, aralkyl, or alkaryl radical; $R^2$ and $R^3$ are independently selected form $C_{1-6}$ low alkyl groups or hydrogen with the proviso that when one is lower alkyl the other group must be hydrogen; n is an integer from 1 to 3.

Useful glycol ether alcohol stabilizers having the sub-generic formula, $R^1—(OCH_2CH_2)_n—$ OH where n is 1 to 3, include for example 2-methoxy ethanol; 2-ethoxy ethanol; 2-butoxy ethanol; 2-hexoxy ethano; 2-phenoxy ethanol; 2-(2-methoxyethoxy)ethanol; 2-(2-butoxyethoxy)ethanol; 2-(2-ethoxyethoxy)ethanol; 2-(2-hexoxyethoxy) ethanol; 2-(phenoxyethoxy)ethanol; ethoxytriglycol; methoxytriglycol; butoxytriglycol; 1-butoxy-2-propanol; 1-propoxy-2-propanol; 1-methoxy-2-propanol; 1-butoxyethoxy-2-propanol; and the like. 2-Butoxyethanol. 2-hexoxyethanol, 2-(2-butoxyethoxy) ethanol, and 2-(2-hexoxyethoxy)ethanol are preferred since they are readily available and produce shear stable electropaints and coatings exhibiting good physical properties.

The glycol ether alcohols are effective in stabilizing various latexes including the cationic latexes described in U.S. Patent 4,512,860 which Patent is incorporated herein by reference. It is believed that the particular glycol ether alcohol is an effective stabilizer because of its hydrophobic/hydrophilic structure. It is noted that a lower level of glycol ether alcohol is required for shear stabilization as the water solubility of the glycol ether alcohol decreases. This would indicate that less of the glycol ether alcohol is in the aqueous phase and more is available at the particle interface or in the particle itself. In such instance a lower total amount of stabilizer would give adequate stabilization. The amount of useful stabilizer is critical in that it must be sufficient to prevent polymer agglomeration, when pumped or otherwise subjected to shear forces, and yet conform to the volatile organic compounds (VOC) limitation to comply with environmental regulations.

Contrary to prior concepts that addition of organic solvent components to a latex paint would result in gross destabilization and gellation, it is now found that the stability of the latex and paint toward shear is remarkably improved over the non-stabilized latex paint without detriment to corrosion and other desirable coating characteristics.

Hamilton Beach Test. The latex electrocoating was strained through a 50-mesh sieve and 100 grams was weighed into a 24-ounce milkshake cup. 1.5 grams of defoamer were added and the sample was mixed for 30 minutes using the medium speed setting of Hamilton Beach Milkshake Mixer Model No. 30. The sample was removed and its consistency noted, i.e. fluid, paste, dilatent, solid, etc. An average of three runs was used.

Shear Stability Test. The disc centrifuge photosedimentometer (DCP) is known to be useful for determining particle size and particle size distribution for latex emulsions and other polymer systems (cf U.S. 3,475,968 and U.S. 4,311,039). The same concept, namely forcing particles under high centrifugal force radially outward through a spin fluid or medium, is readily adaptable for the evaluation of particle agglomeration of the instant

latex composition; larger and denser particles traverse the medium faster (seconds) than do those of smaller (minutes) particle size. This technique is readily adaptable for use with pigmented systems as well. Optical analysis of the exiting particles provide a trace similar to these shown in Figure 1. Figure 1A represents a non-agglomerated latex paint having a double peak: the first represents pigment particles exiting at 0.8 minutes while the second peak represents latex particles exiting at 27 minutes. As the latex agglomerates, the 27-minute peak decreases and the 0.8-minute peak increases representing coagulated latex plus pigment (Figure 1B). All tests were run at disc centrifuge speeds of 3586 rpm using dilute non-ionic surfactant solution as spin medium. The ratio of peak heights - (occurring at 27 minutes and 0.8 minutes) can be used quantitatively to access particle agglomeration.

As noted above, U.S. Patent 4,512,860 teaches an improvement using ion exchange techniques to treat the new latex systems prepared by emulsion polymerization of monomers in an aqueous environment and having cation-active groups supplied by nitrogen containing monomers. By such treatment "amino" fragment, and low molecular weight monomers, are rendered non-conflicting with good electrocoat systems. In the present invention using specific stabilizers, latex systems can be used in electrocoating processes without prior ion exchange purification or other type of cleaning to remove ionic contamination.

Shear or mechanical stability of a latex or latex paint is defined as the lack of substantial particle agglomeration in a disc centrifuge photosedimentometer trace after subjecting said latex or paint to a period of stress mixing for at least 30 minutes - (i.e. Hamlton Beach mixer).

The term "major portion" or "major amount" means in excess of 50 weight percent unless otherwise specified.

The term "minor portion" or "minor amount" means less than 50 weight percent of the entity referred to unless otherwise specified.

The following illustative Examples should not be narrowly construed. Unless otherwise indicated parts and percentages are by weight and temperature is given in degrees Centigrade.

## EXAMPLE 1

| Group | Ingredients | Parts per 100 parts of Monomer |
|---|---|---|
| A | Deionized Water | 88.37 |
| | Triton X-405* | 0.30 |
| | $H_3PO_4$ (85.6% solution in water) | 0.146 |
| B | Butyl Acrylate (BA) | 1.48 |
| | Methyl Methacrylate (MMA) | 2.52 |
| C | Deionized Water | 3.47 |
| | AAP[a] | 0.1 |
| D | Butyl Acrylate | 47.47 |
| | Methyl Methacrylate | 27.47 |
| | Methylethyl Ketoxime-blocked 2-Isocyanato-Ethyl Methacrylate (B-IEMA) | 11.00 |
| | Hydroxypropyl Methacrylate (HPMA) | 9.86 |
| | 2-Mercaptoethanol (HONSH) | 1.10 |
| | 2-Dimethylaminoethyl Methacrylate | 0.20 |
| E | Deionized Water | 9.76 |
| | AAP[a] | 0.20 |
| | Triton X-405* | 1.31 |
| F | Dowcil 75** | 0.05 |
| | Deionized Water | 0.25 |

[a] 2,2'-azobis (2-amidino propane hydrochloride)

*The trademark of Rohm & Haas Company for the nonionic surfactant, ethoxylated octylphenol having an average of 40 moles of ethylene oxide per mole of the phenol.

**A Biocidal additive from Dow Chemical Company.

The latex exhibited an average particle size - (weight average) of ca 5200Å determined by turbidity (disc centrifuge) measurement. Mechanical stability was determined by subjecting the latex to shearing agitation (Hamilton Beach Test) and agglomeration was determined using the disc centrifuge photosedimentometer. This latex was unsuitable for electrodeposition. As shown in Table I this latex was thickened badly when shear tested using the Hamilton Beach test method and was totally agglomerated using the HB/DCP Agglomeration Test. The agglomeration trace is similar to that shown as Figure 1B.

EXAMPLE 2

Preparation of Amine-Adduct Stabilizer

A polyamino polyhydroxy polyether resinous adduct emulsion was prepared according to the procedure indicated in U.S. Patent 4,159,233.

Dimethylaminopropyl amine (DMAPA 102) - (8.52 mole parts) were mixed with 41 weight parts of xylene and heated to reflux under an inert atmosphere. To this mixture was gradually added over a period of about two hours 5,439 weight parts of Dow epoxy resin DER-671 having a molecular weight of about 1,050 (5.18 mole parts), while maintaining reflux. The reflux was continued for about two additional hours or as long as necessary to consume substantially all the oxirane functionality of the epoxy resin. The temperature of the mixture was then gradually raised to about 365°F

while removing xylene and excess amine as distillate. Most of the residual solvent and unreacted DMAPA was removed from the mixture by applying vacuum of about 24 inches of mercury while maintaining the temperature at about 365° until the distillation rate was nil. Then the temperature while 500 weight parts (1.87 mole parts) of a 16 carbon atom alpha-olefin epoxide (Union Carbide) was gradually added over a period of about one hour and at least for an additional 30 minutes so that the mono-epoxide will fully react with the aminated precursor adduct. Finally, 3,151 weight parts of 2-butoxy ethanol was stirred in. The product solution was about 62 percent by weight non-volatiles and the resinous adduct produced has base number of about 130, corresponding to a mole ratio of DMAPA to diepoxide in the product resinous adduct of about 2:1.

The amine-adduct was neutralized by stirring with 1:1 molar ratio of lactic acid (88.5% solution in water) at room temperature.

EXAMPLES 3-9

Preparation of Stabilized Latex

The latex prepared according to Example 1 was divided into 200-gram aliquots. To each aliquot was added a quantity of epoxy-amine adduct prepared according to Example 2 with moderate stirring and then stirred for 30 minutes and allowed to equilibrate overnight. The compositions, given in Table I, were tested for mechanical stability using the Hamilton Beach test and the HB/DCP test - (agglomeration). As shown in Table I all of the examples, except the Control, did not thicken and remained fluid in the Hamilton Beach test. In the Agglomeration test the Control sample was totally agglomerated. Samples with amine adduct additive above 6.0 percent showed no agglomeration with quite marked agglomeration at 2.0 percent and below. Following 30 minutes shear on the mixer, the latex stabilized with 13.6% amine adduct exhibits only one peak at about 13 minutes time. As the amount of stabilizer additive decreases, the sheared latex exhibits increasing agglomeration as noted by the appearance of a new peak at about 0.3 minute and corresponding decrease in the 13-minute peak height. The control with no additive is completely agglomerated-exhibits essentially a single peak at 0.3 minute time with only a trace indication of the original peak at 13 minutes.

EXAMPLE 10

In a separate test the epoxy/amine adduct prepared as in Example 2 and neutralized with lactic acid was added at 7.3% weight percent at various stages during the emulsion polymerization of the latex. As seen in Table II, the finished latex was stable and of good quality when the stabilizer adduct was added during or after the polymerization. Stability was determined using the Agglomeration Test.

**TABLE II**

| Example No. | Point When Amine-Adduct Added | Particle Size Å | Stability* | Latex Appearance (Conversion, Grit Level) |
|---|---|---|---|---|
| 10A | End of Heel Reaction | 10,000Å | Poor | Poor |
| 10B | Half Way Through Monomer Feed | 5800Å | 100% | Very Good |
| 10C | End of Feed (Hot Blend) | 5700Å | 100% | Good |
| 10D | After Reaction Cool Down | 5800Å | 100% | Very Good |

*Agglomeration Test Method

EXAMPLE 11

A similar all-acrylic latex was prepared using the procedure of Example 1 except that the amino monomer, dimethylaminoethyl methacrylate was increased to 2.0 parts per hundred parts monomer with corresponding adjustment of phosphoric acid and the amine/adduct was added at various concentration ranging from zero to 7.3 percent (basis latex solids). Agglomeration tests were run after shearing each sample for 30 minutes on the Hamilton Beach mixer. The stability for these compositions, designated 11A-11E, are shown in Table I. The amine/adduct is effective in imparting mechanical stability to the latex at 1.8 parts adduct and above. Experiment 11A and 11B, with no additive, serve as controls. Although this latex is more stable than Example 1 latex, agglomeration is clearly shown in the control experiments 11A and 11B. Photosedimentometer traces allows one to compare the non-agglomerated samples 11C and 11D (Figures 2A and 2B) containing epoxy additive at 1.8, and 3.7, percent respectively with the control (no additive). It is seen that the agglomeration peak at 20 seconds in the control has disappeared in the stabilized compositions. In the stabilized samples only one peak is seen at 7.3 minutes. This peak has not shifted position indicating no change in particle size with shear.

TABLE I

MECHANICAL STABILITY TESTS

| Example No. | Amine/Adduct (Wt. % Basis Total Resin) | Hamilton Beach | Agglomeration HB/DCP | Peak Ratio |
|---|---|---|---|---|
| 3 | 0 | Thickens | Total | 0 |
| 4 | 1.8 | Pass | Severe | 0.1 |
| 5 | 3.7 | Pass | Moderate | 0.6 |
| 6 | 5.5 | Pass | Slight | 2.8 |
| 7 | 7.3 | Pass | Very Slight | 13.7 |
| 8 | 13.6 | Pass | None | – |
| 9 | 24.0 | Pass | None | – |
| 11A | 0 | Pass | Slight | 5.5 |
| 11B | 0 | Pass | Slight | 6.0 |
| 11C | 0.9 | Pass | None | – |
| 11D | 3.7 | Pass | None | – |
| 11E | 5.5 | Pass | None | – |
| 12A | 0 | Pass | Total | 0 |
| 12B | 7.3 | Pass | Very Slight | 17 |

EXAMPLE 12

Small-particle Size Styrene/Acrylic Latex

A lower particle size styrene/acrylic cation-active latex was prepared using the procedure of Example 1 from the following components:

| Group | Ingredients | Parts per 100 Parts of Monomer |
|---|---|---|
| A | Deionized Water | 139.04 |
| | Triton X-405 | 0.15 |
| | Phosphoric Acid (20%) | 0.624 |
| B | Butyl Acrylate (BA) | 0.74 |
| | Methyl Methacrylate (MMA) | 1.26 |
| C | Deionized Water | 4.19 |
| | AAP | 0.10 |
| D | Butyl Acrylate | 50.46 |
| | Methyl Methacrylate | 18.69 |
| | Styrene | 20.00 |
| | Hydroxypropyl Methacrylate (HPMA) | 8.65 |
| | 2-Dimethylaminoethyl Methacrylate (DMAEMA) | 0.20 |
| | n-Dodecyl Mercaptan (n-DDM) | 0.20 |
| F | Deionized Water | 8.54 |
| | AAP | 0.20 |
| | Triton X-405 | 1.37 |

The latex had a non-volatile content of 38.45% and particle size (weight average) of 3300Å.

The epoxy-amine adduct of Example 2 was post-added to the latex at 7.3 percent (basis total resin solids). The latex was a blend of three latexes synthesized by the procedure of Example 12. The stabilized latex was allowed to equilibrate overnight before testing agglomeration by the HB/DCP method. An unstabilized control having no additive was compared with the stabilized latex. The unstabilized latex was totally agglomerated whereas only slight agglomeration was noted for the stabilized sample. The bimodal nature of the original latex remained intact in the stabilized latex whereas it disappered in favor of the agglomeration peak (20 seconds) is the unstabilized sample subjected to shear.

Heretofore, small particle size latex (2500-3500Å) showed good coating characteristics and dry film properties but were quite unstable to shear forces. This experiment shows that mixed systems prepared at lower particle size can indeed be shear stabilized by addition of epoxy-amine stabilizer.

EXAMPLE 13

A cation-active latex similar to that of Example 1 was stabilized by mixing 0, 3.65, 10.95, and 14.60 parts of the epoxy/amine adduct of Example 2 per hundred parts (solids) latex using a motor driven agitator. The composition was reduced to 5% NV with deionized water. A series of panels (iron-phosphated steel, 4 in. x 4 in.) were electrocoated at 25°C over the range 100V to 250V using 50V increments. The latex without stabilizer adduct did not electrocoat without further purification (i.e. ion-exchange). In contrast all stabilized latex samples electrocoated without ion-exchange treatment. Excellent shutdown (zero current) was obtained up to 400V without rupture using a 64-second duration. Film thickness ranged from 0.8-1.5 mil as seen in Table III. As seen, film thickness can be controlled by adjusting voltage of stabilizer level.

TABLE III

FILM THICKNESS (MIL) VS VOLTAGE ELECTRODEPOSITION (25°C)

| Experiment No. | Level Epoxy/Amine Adduct* | Deposited Film Thickness (Mils) (Voltage) 100 | 150 | 200 | 250 |
|---|---|---|---|---|---|
| 13A | 0 | - - - - - No Coating** - - - - | | | |
| 13B | 3.65 | 1.45 | 1.28 | 1.21 | 1.16 |
| 13C | 7.30 | 1.28 | 1.18 | 1.12 | 1.08 |
| 13D | 10.95 | 1.02 | 0.99 | 0.98 | 0.94 |
| 13E | 14.60 | 0.90 | 0.86 | 0.84 | 0.84 |

*Parts per hundred parts polymer

**Did not electrocoat

Example14

A cationic latex was prepared by emulsion polymerization of the following ingredients:

| | | |
|---|---|---|
| A | Deionized Water | 175.40g |
| | Triton X-405 | 0.57 |
| | $H_3PO_4$ (active) | 0.16 |
| B | Butyl Acrylate | 1.92 |
| | Methyl Methacrylate | 3.27 |
| C | Deionized Water | 5.44 |
| | 2,2'-azobis (amidino-propane hydrochloride) (AAP) | 0.13 |
| D. | Butyl Acrylate | 30.87 |
| | Methyl Methacrylate | 22.82 |
| | Hydroxypropyl Methacrylate | 11.21 |
| | Dimethylaminoethyl Methacrylate | 0.26 |
| | n-Dodecyl Mercaptan | 0.26 |
| E | Blocked Isophoronediisocyanate (IPDI) emulsion: | |
| | phm Blocked IPDI | 29.65g |
| | phm Butyl Acrylate | 17.05 |
| | phm Methyl Methacrylate | 12.60 |
| | phm Deionized Water | 58.71 |
| | phm Triton X-405 | 0.59 |
| F | Deionized Water | 10.86 |
| | AAP | 0.26 |
| | Triton X-405 | 1.40 |

Group A ingredients were heated in an agitated reactor sparged with nitrogen to 75°C. Group B ingredients were added, and after about 5 minutes, Group C. This "heel" reaction was maintained for 30 minutes. Three separate feeds were then begun: Group D (monomer) was fed over 4 hours, Group E (crosslinker) was fed over 3 hours, and Group F (initiator) was fed over 4-1/2 hours. The reaction mixture was held at 75°C for one hour after which it was allowed to cool to ambient temperture before filtering through a 200-mesh screen.

Example 15

A pigment grid for combination with the latex of Example 14 was prepared as follows:

| | | |
|---|---|---|
| A | Epoxy resin* | 37.5g |
| | Lactic Acid | 6.0 |
| B | Ethylene Glycol Monobutyl Ether (EGMBE) | 77.2 |
| | Deionized Water | 142.0 |
| | Surfynol 104 | 6.3 |
| | Titanium Dioxide | 347.0 |
| | Carbon Black | 6.3 |
| | Deionized Water | 198.7 |
| | Surfynol 104 | 3.1 |
| | China Clay | 88.4 |
| C | Deionized Water | 87.7 |

*Resin of Example I (U.S. 4,159,233)

Group A ingredients were allowed to mix for 10 minutes using a Cowles-type disperser. The items in Group B were then added to the resin mixture in the order listed with continous agitation. After all the Group B ingredients were added, the formula was allowed to grind for 15 minutes using a Cowles-type disperser. Then Group C was added and the entire mixture was dispersed using a shot mill for 60 minutes. The mill consists of glass bead media in an enclosed polypropylene container agitated using a Red Devil paint shaker. The mixture was cooled to room temperature, and the media filtered off.

The electrocoating bath was prepared from 73.7% of the above latex and 26% of the above grind, based on non-volatile material. This mixture was diluted to 10%. non-volatile using deionized water, and EGMBE added to the bath at various levels. The mixtures were allowed to equilibrate 12-24 hours.

The levels of EGMBE evaluated were 0, 5, 10, 15, 20, 30 and 40% based on latex polymer weight. Traces obtained from disc centrifuge photosedimentometer both before and after 30 minutes of Hamilton Beach shear are shown in Figure 3 (3A-3D). When non EGMBE was added, total agglomeration of the latex particles was observed (see Figure 1B). By increasing the level of EGMBE, greater degrees of stability were attained. Shear stability is enhanced at levels as low as 5%. Practically no agglomeration was noted at 15% glycol ether alcohol additive.

These results are contrary to prior art which teaches that addition of solvent to a latex would result in destabilization and subsequent particle agglomeration.

EXAMPLE 16

An electrocoating bath was prepared from 73.7% of the latex described in Example 14 and 26.3% of the pigment grind described in Example 15, based on non-volatile material. The mixture was diluted to 10% non-volatile using deionized water, and various glycol ether alcohols were added to the bath at 10, 20, and 30%, based on lated polymer weight. DSC trades were taken for all coating samples. Shear stability was evaluated using the disc centrifuge photosedimentometer - (DSC) tracing both before and after subjecting to Hamilton Beach Shear Test (30 minutes at medium speed). The relative peak positions (with time) and peak heights as the stabilizer, ethylene glycol monobutyl ether, is increased over the range of 5-30% stabilizer additive, was determined.

A measurement was made of peak heights comparing the separate peaks attributed to latex and to pigment before and after shear. A ratio was calculated for the latex peak height relative to the pigment peak height (PL/PP). Finally the percentage change in this ratio from before to after shear was calculated.

Glycol ether alcohols, substituted with alkyl groups of varing sizes, were tested for their effect on the mechanical stability of the latex electrocoating, and the % shift in the PL/PP was plotted against the alkyl chain length for the three solvent levels tested. The longer the substituted alkyl chain on the glycol ether alcohol, the lower the shift in the peak ratio at the same solvent level, and consequently the greater the shear stability.

In addition, this series of experiments showed that the longer the substituted alkyl chain length, the lower the level of glycol ether alcohol solvent required for mechanical stability of the electrocoating.

## Claims

1. A stable latex composition which comprises a major amount of structured cation-active latex formed by emulsion polymerization of various vinyl monomers in an aqueous medium and a minor amount of from about 0.5 to 25 weight percent basis latex solids of a substantially oxirane-free, cationic resin adduct sufficient to impart mechanical and shear stability to said latex; wherein said cationic resin adduct is an amine-modified epoxy resin salt resulting from the reaction of an oligomer selected from the group consisting of polyether, polyester, polyamide, polyepoxide, or polyamine or mixture thereof having at least one reactive epoxide ring with an amine having at least one amino hydrogen capable of reacting with said epoxide to form said adduct; wherein said oligomer has a molecular weight of from about 400 to 1,500; said resin and said adduct are at least partially neutralized with an inorganic or organic acid; and wherein the stability of said latex is evidenced by the lack of substantial particle agglomeration in a disc centrifuge photosedimentometer trace after subjecting said latex to stress mixing for a period of at least 30 minutes.

2. The latex according to Claim 1 wherein the amine-modified epoxy resin is obtained by first reacting a lower molecular weight $C_{4-20}$ diamine with a multifunctional epoxide terminated polyether to produce an intermediate adduct having a residual amount of reactive N-H linkages suitable for further reaction with an epoxide and thereafter reacting the intermediate adduct with a $C_{3-20}$ alkyl monoepoxide in an amount sufficient to react substantially all the amino hydrogen linkages.

3. The latex composition according to Claim 2 wherein the diamine is dimethylaminopropylamine, which is first partially reacted with bisphenol A derived polyether epoxide, and then further reacted with an alpha-olefin epoxide and the said resin is neutralized with an organic acid.

4. The latex of Claim 1, 2, or 3 wherein the composition additionally contains a minor amount of a glycol ether alcohol stabilizer having the formula:

$R^1—(X)_n—OH$

wherein X equals $—OCH(R^2)CH(R^3)—$ and each X unit can be mutually independent of other X units; $R^1$ is a $C_{1-20}$ alkyl, alkylene, aryl, aralkyl or alkaryl radical; $R^2$ and $R^3$ are independently selected from $C_{1-6}$ lower alkyl groups or hydrogen with the proviso that when one is lower alkyl the other group must be hydrogen; n is an integer from 1 to 3.

5. The latex compositions of Claims 1, 2, 3, or 4 wherein the said latex is a polymer derived from acrylate and/or methacrylate monomer units, monomer units having secondary and/or tertiary amino functionality, and optionally vinyl unsaturated hydrocarbon monomers and hydroxyalkyl acrylate or methacrylate monomers.

6. A method for electrocoating an electrically conductive surface serving as a cathode in an electrical circuit comprising said cathode, an anode, and an aqueous electrodepositable latex composition wherein said composition comprises the composition of Claims 1, 2, 3, 4, or 5.

7. An article coated by the method of Claim 6.

8. An improved process for preparing a shear stable cationic latex paint suitable for electrocoating which comprises:

a. preparing an amine-stabilized cationic latex by emulsion polymerization in an aqueous medium;

b. neutralizing at least partially said amine-stabilized latex with an inorganic or organic acid;

c. formulating an electrocoating paint by combining said neutralized cationic latex with pigment grind and diluting with deionized water to non-volatile content of 1-30%;

d. adding to said latex or electrocoating paint a stabilizing amount of an amine modified epoxy cationic resin and/or a glycol ether alcohol to form a mechanically stable latex;

wherein said amine-modified epoxy cationic resin or salt thereof is an adduct obtained by the reaction of an oligomer selected from the group consisting of polyether, polyester, polyamide, polyepoxide, or polyamine or mixtures thereof having at least one reactive epoxide ring with an amine having at least one amino hydrogen capable of reacting with said epoxide to form said adduct; wherein said oligomer has a molecular weight of from about 400 to 1,500;

wherein said glycol ether alcohol having the formula:

$R^1—(X)_n—OH$

wherein X equals $—OCH(R^2)CH(R^3)—$ and each X unit can be mutually independent of other units; $R^1$and $C_{1-20}$ alkyl, alkylene, aryl, aralkyl, or alkaryl radical; $R^2$ and $R^3$ independently selected from $C_{1-6}$ lower alkyl groups or hydrogen with the proviso that when one is lower alkyl the other group must by hydrogen; n is an integer from 1 to 3; and

wherein said shear stabilization is defined as lack of substantial particle agglomeration in a disc centrifuge photosedimentometer trace after subjecting said paint to a 30-minute period of high speed mixing.

9. The process of Claim 8 wherein the amine-modified epoxy resin adduct is obtained by first reacting a lower molecular weight $C_{4-20}$ diamine with a multifunctional epoxide terminated polyether to produce an intermediate adduct having a residual amount of reactive N-H linkages suitable for further reaction with an epoxide and therafter reacting the intermediate adduct with a $C_{3-20}$ alkyl epoxide in an amount sufficient to react substantially all the amino hydrogen linkages; the said latex is a polymer derived from acrylate and/or methacrylate monomer units, monomer units having secondary and/or tertiary amino functionality, and optionally vinyl unsaturated hydrocarbon monomers and hydroxyalkyl acrylate or methacrylate monomers; and the glycol ether alcohol stabilizer is selected from the group consisting of 2-butoxyethanol, 2-hexoxyethanol, 2-(2-hexoxyethoxy)ethanol and 2-(2-butoxyethoxy) ethanol.

10. A metal substrate electrocoated by the paint prepared by the process of Claim 9.

FIGURE 1/3

MECHANICAL INSTABILITY OF UNMODIFIED LATEX PAINT

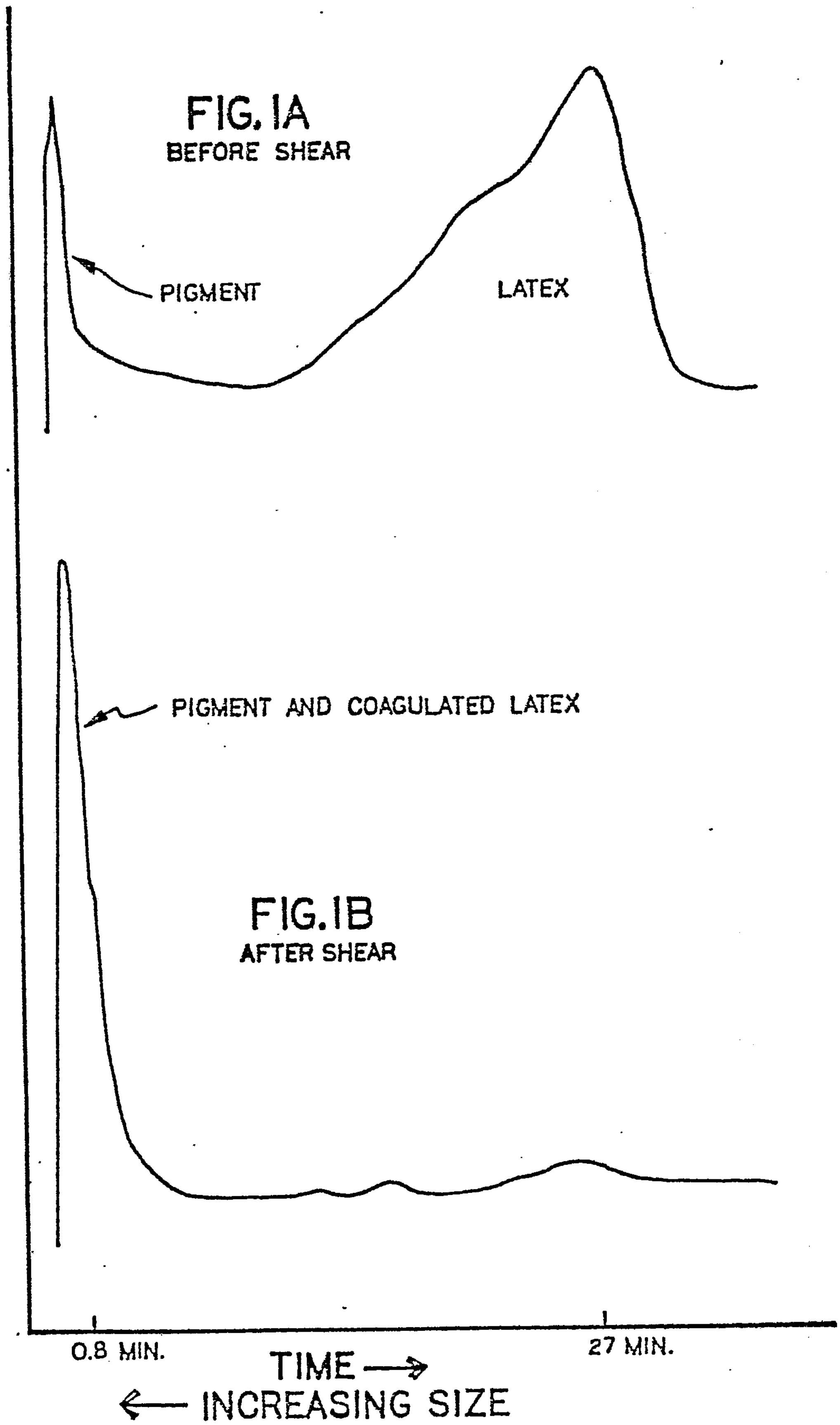

FIGURE 2/3

EFFECT OF AMINE ADDUCT ON LATEX STABILITY

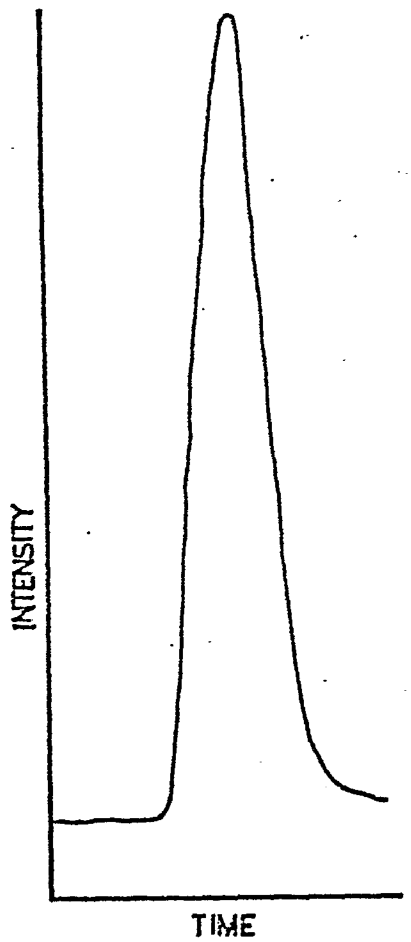


FIG.2A

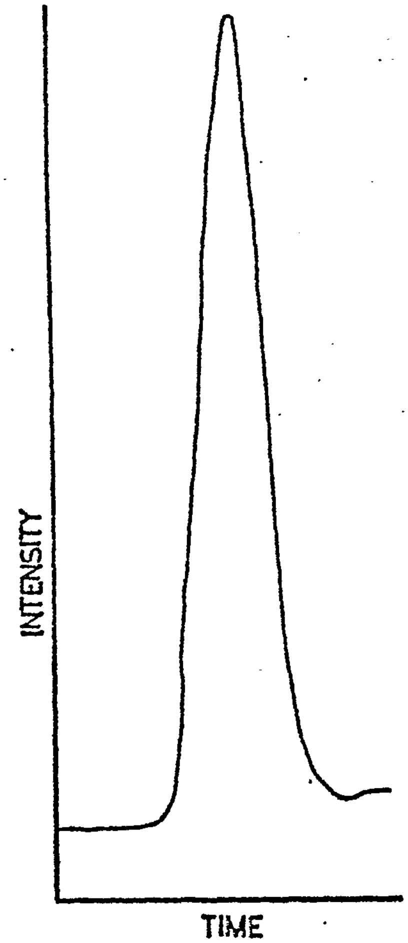


FIG.2B

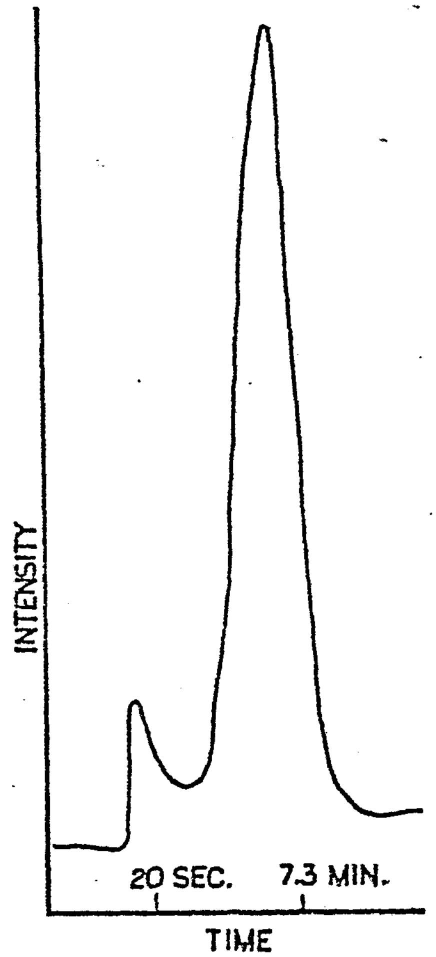


FIG.2C

FIGURE 3/3

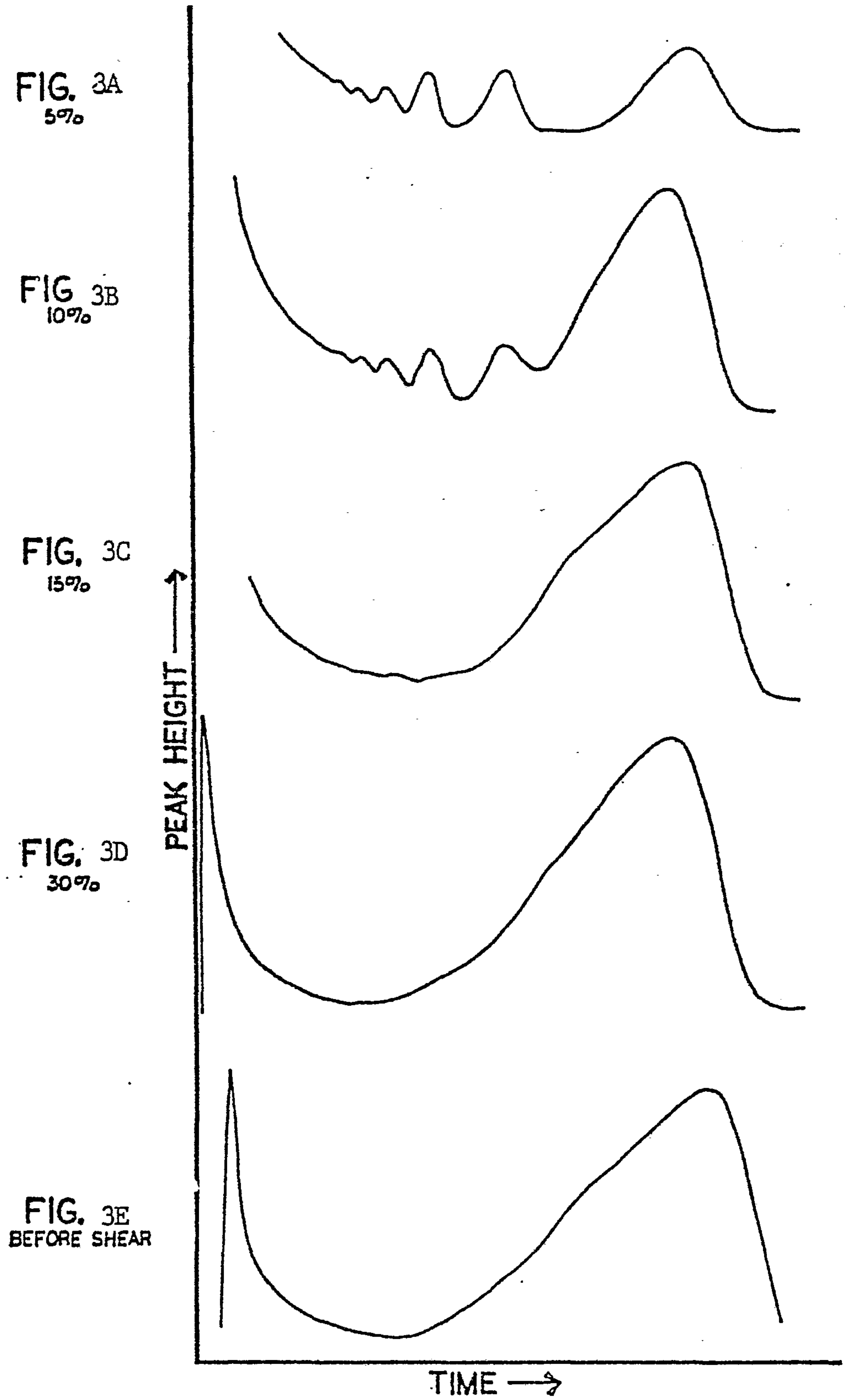


FIG. 3 ADDITIVE STABILIZATION OF LATEX PAINT